# EUROPÄISCHE PATENTANMELDUNG

(11) **EP 2 975 195 A1**
(43) Veröffentlichungstag der Anmeldung: **20.01.2016**
(21) Anmeldenummer: 14177150.1
(22) Anmeldetag: 15.07.2014
(51) Int. Cl.: E04G 15/06, E04G 17/00, F16B 2/22, A47B 47/00, B65D 6/26

(54) **Aussparungsbaugruppe für Bauwerke**

(71) Anmelder: Binder, Robert, 87452 Altusried (DE)
(72) Erfinder: Binder, Robert, 87452 Altusried (DE)
(74) Vertreter: Dilg, Haeusler, Schindelmann Patentanwaltsgesellschaft mbH

(57) **Zusammenfassung**

Offenbart wird eine Aussparungsbaugruppe (102) für ein Bauwerk, insbesondere ein Betonbauwerk, wobei die Aussparungsbaugruppe (102) verwendbar ist, um eine Aussparung (108) in dem Bauwerk zu bilden, die Aussparungsbaugruppe (102) enthaltend: ein erstes Flächenelement (104); ein zweites Flächenelement (104); mindestens eine Profilschiene (106) mit einer ersten Ausnehmung und einer zweiten Ausnehmung, wobei das erste Flächenelement (104) in die erste Ausnehmung und das zweite Flächenelement (104) in die zweite Ausnehmung einsetzbar ist, um eine Aussparungsvorrichtung (100) zu bilden.

## Beschreibung

### GEBIET DER ERFINDUNG

Die vorliegende Erfindung betrifft das Gebiet der Erstellung von Bauwerken.

### HINTERGRUND

Bauwerke erfordern eine Vielzahl von Aussparungen in ihren Strukturelementen wie beispielsweise Decken, Böden und Mauern, beispielsweise zur Aufnahme von elektrischen Leitungen, Wasserleitungen, Steckdosen, Bedienelementen wie beispielsweise Schalter, etc.

Aus der Praxis sind Aussparungskästen aus Holz oder aus Metall bekannt, die vor Ort entsprechend den Größenanforderungen hergestellt und als Schalung in einem Betonteil verwendet werden. Aussparungskästen aus Holz werden beispielsweise hergestellt, indem Einzelteile des Aussparungskastens durch Nägel verbunden werden. Nach der Verfestigung des Betons wird die Holzschalung entfernt. Auch bei der Verwendung von Metall-Aussparungskästen ist eine Entfernung nach dem Verfestigen des Betonteils vorteilhaft, da sich sonst aufgrund von Rostbildung eine nachträgliche Verfärbung des an den Aussparungskasten angrenzenden Putzes ergeben kann.

### ZUSAMMENFASSUNG

Angesichts der oben beschriebenen Situation gibt es ein Bedürfnis für eine Technik, welches eine effiziente Erstellung einer Aussparung in einem Bauwerk erlaubt.

Diesem Bedürfnis wird durch die unabhängigen Patentansprüche Rechnung getragen. Vorteilhafte Ausführungsformen sind in den abhängigen Patentansprüchen angegeben.

Gemäß einem ersten Aspekt der hierin offenbarten Gegenstände wird eine Aussparungsbaugruppe für ein Bauwerk, insbesondere ein Betonbauwerk bereitgestellt, wobei die Aussparungsbaugruppe verwendbar ist, um eine Aussparung in dem Bauwerk zu bilden, die Aussparungsbaugruppe enthaltend: ein erstes Flächenelement; ein zweites Flächenelement; mindestens eine Profilschiene mit einer ersten Ausnehmung und einer zweiten Ausnehmung, wobei das erste Flächenelement in die erste Ausnehmung und das zweite Flächenelement in die zweite Ausnehmung einsetzbar ist.

Dieser Aspekt der hierin offenbarten Gegenstände basiert auf der Idee, dass eine Verbindung von zwei Flächenelementen zeitsparend durch eine Profilschiene erfolgen kann, in welche die Flächenelemente einsetzbar sind.

Gemäß Ausführungsformen des ersten Aspektes ist die Aussparungsbaugruppe eingerichtet zum Liefern der Funktionalität von einer oder mehreren Ausführungsformen der hierein offenbarten Gegenstände und/oder zum Liefern der Funktionalität, wie sie für eine oder mehrere Ausführungsformen der hierin offenbarten Gegenstände erforderlich ist.

Gemäß einem zweiten Aspekt der hierin offenbarten Gegenstände wird eine Aussparungsvorrichtung bereitgestellt, die Aussparungsvorrichtung enthaltend eine Aussparungsbaugruppe nach dem ersten Aspekt, wobei das erste Flächenelement in die erste Ausnehmung eingesetzt ist und das zweite Flächenelement in die zweite Ausnehmung eingesetzt ist.

Gemäß Ausführungsformen des zweiten Aspektes ist die Aussparungsvorrichtung eingerichtet zum Liefern der Funktionalität von einer oder mehreren Ausführungsformen der hierein offenbarten Gegenstände und/oder zum Liefern der Funktionalität, wie sie für eine oder mehrere Ausführungsformen der hierin offenbarten Gegenstände erforderlich ist.

Gemäß einer Ausführungsform eines dritten Aspektes der hierin offenbarten Gegenstände wird ein Bauwerk bereitgestellt, das Bauwerk enthaltend eine Aussparungsvorrichtung nach dem zweiten Aspekt wobei die Aussparungsvorrichtung vorzugsweise eine verlorene Schalung bildet.

Gemäß Ausführungsformen des dritten Aspektes ist die Aussparungsbaugruppe eingerichtet zum Liefern der Funktionalität von einer oder mehreren Ausführungsformen der hierein offenbarten Gegenstände und/oder zum Liefern der Funktionalität, wie sie für eine oder mehrere Ausführungsformen der hierin offenbarten Gegenstände erforderlich ist.

Gemäß einem vierten Aspekt der hierin offenbarten Gegenstände wird eine Verwendung einer Profilschiene zum Herstellen einer Aussparungsvorrichtung für ein Bauwerk bereitgestellt, die Profilschiene enthaltend: eine erste Ausnehmung; und eine zweite Ausnehmung; wobei die erste Ausnehmung und die zweite Ausnehmung ausgebildet sind, um jeweils ein Flächenelement aufzunehmen.

Gemäß Ausführungsformen des vierten Aspektes ist die Profilschiene oder deren Verwendung eingerichtet zum Liefern der Funktionalität von einer oder mehreren Ausführungsformen der hierein offenbarten Gegenstände und/oder zum Liefern der Funktionalität, wie sie für eine oder mehrere Ausführungsformen der hierin offenbarten Gegenstände erforderlich ist. Gemäß einem fünften Aspekt der hierin offenbarten Gegenstände wird ein Verfahren zum Herstellen einer Aussparungsvorrichtung für ein Bauwerk bereitgestellt, das Verfahren enthaltend: Bereitstellen einer Profilschiene mit einer ersten Ausnehmung und einer zweiten Ausnehmung; Einführen eines ersten Flächenelements in die erste Ausnehmung; und Einführen eines zweiten Flächenelements in die zweite Ausnehmung.

Gemäß Ausführungsformen des fünften Aspektes ist das Verfahren eingerichtet zum Liefern der Funktionalität von einer oder mehreren Ausführungsformen der hierein offenbarten Gegenstände und/oder zum Liefern der Funktionalität, wie sie für eine oder mehrere Ausführungsformen der hierin offenbarten Gegenstände erforderlich ist.

Allgemein ist eine Bezugnahme auf Ausführungsformen der hierein offenbarten Gegenstände nicht auf einen bestimmten Aspekt beschränkt, sondern umfasst stets Ausführungsformen aller hierin offenbarten Aspekte.

Im Folgenden werden exemplarische Ausführungsformen der hierin offenbarten Gegenstände beschrieben, wobei beispielsweise auf eine Aussparungsbaugruppe, eine Aussparungsvorrichtung, ein Bauwerk, eine Verwendung einer Profilschiene und ein Verfahren Bezug genommen wird. Es sollte hervorgehoben werden, dass natürlich jede Kombination von Merkmalen verschiedener Aspekte, Ausführungsformen und Beispiele möglich ist. Insbesondere werden einige Ausführungsformen mit Bezug auf ein Verfahren oder eine Verwendung beschrieben, während andere Ausführungsformen mit Bezug auf eine Vorrichtung, eine Baugruppe oder ein Bauwerk beschrieben werden. Jedoch wird der Fachmann der vorstehenden und der nachfolgenden Beschreibung, den Ansprüche und den Zeichnungen entnehmen, dass, solange es nicht anders angegeben ist, Merkmale verschiedener Aspekte, Ausführungsformen und Beispiele kombinierbar sind und solche Kombinationen von Merkmalen als durch diese Anmeldung offenbart anzusehen sind. Beispielsweise ist selbst ein Merkmal, welches sich auf ein Verfahren bezieht, mit einem Merkmal kombinierbar, welches sich auf eine Vorrichtung bezieht, und umgekehrt.

Weitere Vorteile und Merkmale der vorliegenden Erfindung ergeben sich aus der folgenden beispielhaften Beschreibung derzeit bevorzugter Ausführungsformen, auf welche die Erfindung jedoch nicht beschränkt ist. Die einzelnen Figuren der Zeichnungen dieser Anmeldung sind lediglich als schematisch und als nicht maßstabsgetreu anzusehen.

### KURZE BESCHREIBUNG DER ZEICHNUNGEN

Fig. 1 zeigt eine Aussparungsvorrichtung gemäß Ausführungsformen der hierin offenbarten Gegenstände.
Fig. 2 zeigt eine Profilschiene gemäß Ausführungsformen der hierin offenbarten Gegenstände.
Fig. 3 zeigt eine Frontansicht der Profilschiene aus Fig. 2 gesehen von der Linie III-III in Fig. 2.
Fig. 4 zeigt einen Querschnitt der Profilschiene aus Fig. 2, wobei ein erstes Flächenelement in die erste Aussparung eingesetzt ist und ein zweites Flächenelement die zweite Aussparung eingesetzt ist.
Fig. 5 zeigt eine Aussparungsvorrichtung gemäß Ausführungsformen der hierin offenbarten Gegenstände.
Fig. 6 zeigt eine Querschnittsansicht der Aussparungsvorrichtung aus Fig. 5 entlang der Linie VI-VI.
Fig. 7 zeigt einen Teil eines Bauwerkes gemäß Ausführungsformen der hierin offenbarten Gegenstände mit zwei in Position befindlichen Schalungselementen.
Fig. 8 zeigt das Bauwerk aus Fig. 7 nach dem Entfernen der Schalungselemente.
Fig. 9 zeigt eine perspektivische Ansicht einer Aussparungsvorrichtung gemäß Ausführungsformen der hierin offenbarten Gegenstände.
Fig. 10 zeigt eine Draufsicht auf eine Aussparungsvorrichtung gemäß Ausführungsformen der hierin offenbarten Gegenstände.
Fig. 11 zeigt ein weiteres Bauwerk gemäß Ausführungsformen der hierin offenbarten Gegenstände.

### DETAILLIERTE BESCHREIBUNG

Es wird angemerkt, dass in verschiedenen Figuren ähnliche oder identische Elemente oder Komponenten mit denselben Bezugszahlen versehen sind, oder mit Bezugszahlen, die sich nur in der ersten Ziffer oder einem angehängten Buchstaben unterscheiden. Solche Merkmale bzw. Komponenten, die mit den entsprechenden Merkmalen bzw. Komponenten in einer anderen Fig. gleich oder zumindest funktionsgleich sind, werden nur bei ihrem ersten Auftreten in dem nachfolgenden Text detailliert beschrieben und die Beschreibung wird bei nachfolgendem Auftreten dieser Merkmale und Komponenten (bzw. der entsprechenden Bezugszahlen) nicht wiederholt.

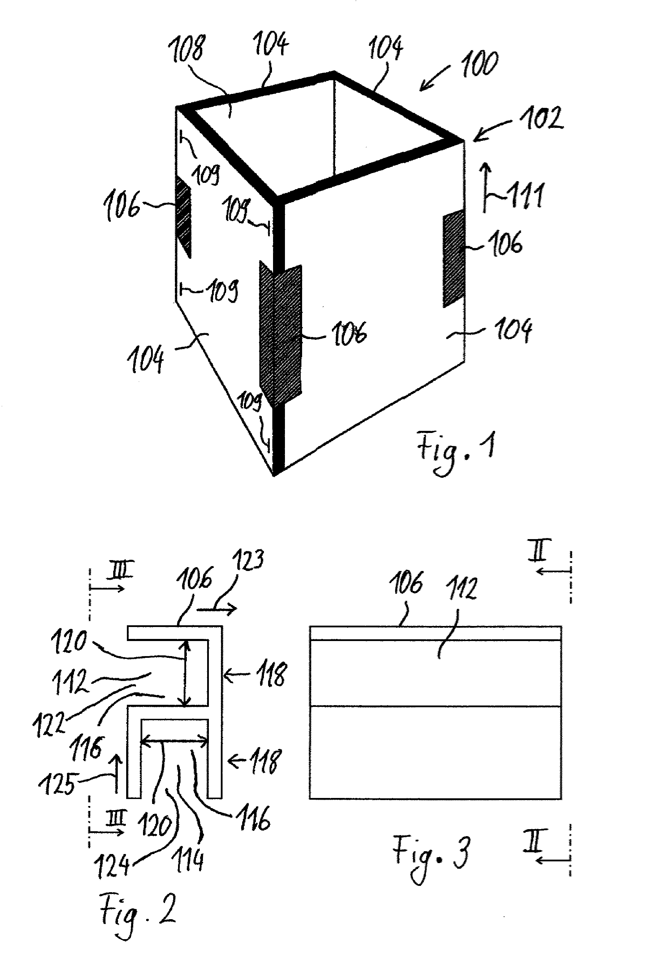

Fig. 1 zeigt eine Aussparungsvorrichtung 100 gemäß Ausführungsformen der hierin offenbarten Gegenstände.

Die Aussparungsvorrichtung 100 besteht gemäß einer Ausführungsform aus einer montierten Aussparungsbaugruppe 102. Gemäß einer Ausführungsform enthält die Aussparungsbaugruppe mindestens zwei Flächenelemente 104, beispielsweise vier Flächenelemente 104, wie in Fig. 1 dargestellt. Ferner enthält die Aussparungsbaugruppe 102 mindestens eine Profilschiene 106, beispielsweise vier Profilschienen 106, wie in Fig. 1 dargestellt (in Fig. 1 sind drei Profilschienen 106 sichtbar). Jeweils ein erstes Flächenelement 104 und ein zweites Flächenelement 104 der Aussparungsbaugruppe 102 sind in eine Ausnehmung (in Fig. 1 nicht dargestellt) der Profilschienen 106 eingesetzt. Die Flächenelemente 104 der Aussparungsbaugruppe 102 definieren mindestens einen Teil eines Volumens 108, welches in dem Bauwerk (in Fig. 1 nicht dargestellt) die Aussparung bildet. Gemäß einer Ausführungsform bildet das Volumen 108 in dem Bauwerk beispielsweise eine Vertiefung oder ein Durchgangsloch. Gemäß einer Ausführungsform sind alle Flächenelemente 104 in die entsprechende Ausnehmung in der Profilschienen 106 eingesetzt, d.h. die Aussparungsbaugruppe 102 befindet sich in diesem Fall in einem montierten Zustand. In diesem montierten Zustand wird die Aussparungsbaugruppe 102 im Rahmen dieser Offenbarung als Aussparungsvorrichtung 104 bezeichnet.

Gemäß einer Ausführungsform fixiert die Profilschiene 106 die Flächenelemente 104, die in die Ausnehmungen in der Profilschiene 106 eingesetzt sind, relativ zueinander. Diese Fixierung kann gemäß einer Ausführungsform beispielsweise in einer Klebeverbindung zwischen den Flächenelementen und der Profilschiene 106 bestehen. Gemäß einer anderen Ausführungsform sind die Profilschiene 106 und die Flächenelemente 104 ausgebildet, so dass, wenn die Flächenelemente 104 in die Ausnehmungen eingesetzt sind, sich die Flächenelemente in Klemmeingriff mit der Profilschiene 106 befinden.

Gemäß einer Ausführungsform enthält die Aussparungsvorrichtung 104 ein Befestigungselement 109, beispielsweise eine Mehrzahl von Befestigungselementen 109, wie in Fig. 1 dargestellt. Gemäß einer Ausführungsform erstrecken sich die Befestigungselemente 109 sowohl in ein erstes Flächenelement 104 als auch in ein zweites Flächenelement 104, um das erste Flächenelement 104 und das zweite Flächenelement 104 ein einander zu fixieren. Gemäß einer Ausführungsform ist das Befestigungselement 109 durch einen Nagel gebildet. Gemäß einer weiteren Ausführungsform ist das Befestigungselement 109 durch eine Schraube gebildet. Gemäß einer weiteren Ausführungsform ist das Befestigungselement 109 durch eine Trackernadel gebildet, wie dies beispielhaft in Fig. 1 dargestellt ist. Gemäß einer Ausführungsform ist das Befestigungselement 109 mit Abstand von der Profilschiene 106 angeordnet. Mit anderen Worten erstreckt sich bei dieser Ausführungsform das Befestigungselement 109 nicht durch die Profilschiene 106 hindurch. Vielmehr befindet das Befestigungselement 109 bei dieser Ausführungsform neben der Profilschiene 106, z. B. in einer axialen Richtung 111 der Profilschiene 106 neben der Profilschiene 106, wie dies beispielhaft in Fig. 1 dargestellt ist.

Gemäß einer Ausführungsform sind die Flächenelemente 104 durch Platten gebildet, beispielsweise durch rechteckige Platten, wie in Fig. 1 dargestellt. Gemäß einer Ausführungsform bestehen die Flächenelemente 104 einer Aussparungsbaugruppe aus mindestens einem von einem Faserverbundmaterial, insbesondere aus Faserzementmaterial, Gipsfasermaterial, Holzfaserzementgebundenem Material, Holz, Kunststoff, Metall. Gemäß einer weiteren Ausführungsform enthalten die Flächenelemente 104 mindestens eines der vorstehend genannten Materialien. Gemäß einer Ausführungsform sind die Flächenelemente 104 aus einem Material hergestellt, welches sich auf der Baustelle durch übliche Werkzeuge, beispielsweise eine Kreissäge, auf die gewünschte Größe zuschneiden lässt. Hierfür können die Flächenelemente 104 beispielsweise aus einem oder mehreren der vorstehend genannten Materialien gebildet sein. Es versteht sich jedoch, dass die Flächenelemente 104 auch aus anderen Materialien bestehen können. Gemäß einer Ausführungsform können die verwendeten Materialien an den Einsatzzweck, beispielsweise Feuchträume, angepasst sein.

Fig. 2 zeigt eine Profilschiene gemäß Ausführungsformen der hierin offenbarten Gegenstände.

Gemäß einer Ausführungsform wird zur Herstellung der Aussparungsvorrichtung eine Profilschiene 106 verwendet, welche eine erste Ausnehmung 112 und eine zweite Ausnehmung 114 aufweist. Gemäß einer Ausführungsform sind die erste Ausnehmung 112 und die zweite Ausnehmung 114 ausgebildet, um jeweils ein Flächenelement (in Fig. 2 nicht dargestellt), beispielsweise ein plattenförmiges Flächenelement, aufzunehmen. Gemäß einer Ausführungsform ist die Profilschiene aus Metall, beispielsweise Aluminium, oder aus Kunststoff gebildet.

Gemäß einer Ausführungsform ist mindestens eine von der ersten Ausnehmung 112 und der zweiten Ausnehmung 114 durch einen Schlitz 116 in der Profilschiene 106 gebildet. Gemäß einer Ausführungsform ist der Schlitz 116 in der Profilschiene 106 von rechteckigem Querschnitt. Dies hat den Vorteil, dass bei einem Zuschnitt des Flächenelementes 104 mit einer Säge der Schlitz 116 an die Schnittkante des Flächenelementes 104 angepasst ist. Gemäß einer weiteren Ausführungsform ist jeder Schlitz 116 durch einen U-förmigen Profilabschnitt 118 der Profilschiene 106 gebildet, wie in Fig. 2 dargestellt.

Gemäß einer Ausführungsform weist mindestens eine von der ersten Ausnehmung 112 und der zweiten Ausnehmung 114 (beispielsweise beide Ausnehmungen 112, 114) eine lichte Weite 120 auf, die kleiner ist als die Dicke des in der betreffenden Ausnehmung angeordneten Flächenelementes (in Fig. 2 nicht dargestellt), um das in der betreffenden Ausnehmung 112, 114 angeordnete Flächenelement 104 in Klemmeingriff zu halten. Gemäß einer Ausführungsform ist die Profilschiene 106 somit eine selbstklemmende Profilschiene. Dies kann die Herstellung der Aussparungsvorrichtung 100 im Steckverfahren erleichtern. Gemäß einer Ausführungsform sind die Ausnehmungen 112, 114 so angeordnet, dass ein hydrostatischer Umgebungsdruck die Flächenelemente 104 in die betreffende Ausnehmung 112,114 hinein drückt. Auf diese Weise können weitere Befestigungselemente entbehrlich sein. Alternativ können solche weiteren Befestigungselemente verwendet werden (in Fig. 2 nicht dargestellt), wobei auch hier ein Klemmeingriff zwischen Ausnehmung 112,114 und Flächenelement 104 vorteilhaft ist, um das Flächenelement 104 bis zur Fixierung durch das Befestigungselement in der Ausnehmung 112,114 zu halten.

Gemäß einer Ausführungsform weist die Profilschiene 106 eine erste Öffnung 122 auf, durch welche das erste Flächenelement 104 entlang einer ersten Richtung 123 in die erste Ausnehmung 112 einführbar ist. Gemäß einer weiteren Ausführungsform weist die Profilschiene 106 eine zweite Öffnung 124 auf, durch welche das zweite Flächenelement 104 entlang einer zweiten Richtung 125 in die zweite Ausnehmung einführbar ist. Die Flächenelemente 104 sind in Fig. 2 aus Gründen der Übersichtlichkeit nicht dargestellt. Gemäß einer weiteren Ausführungsform schließen die erste Richtung 123 und die zweite Richtung 125 einen Winkel größer Null Grad ein, beispielsweise einen Winkel von 90 Grad, wie in Fig. 2 dargestellt. Gemäß einer anderen Ausführungsform weicht der Winkel zwischen der ersten Richtung 123 und der zweiten Richtung 125 von 90 Grad ab. Dies kann beispielsweise gewünscht sein, wenn die Aussparungsvorrichtung nicht einen rechteckigen Querschnitt aufweisen soll, wie in Fig. 1 dargestellt, sondern einen von der rechteckigen Form abweichenden Querschnitt, beispielsweise mit einen dreieckigen Querschnitt, einen fünfeckigen Querschnitt, etc. Es versteht sich, dass bei entsprechend gekrümmten Flächenelementen auch Aussparungsvorrichtungen mit einem runden (beispielsweise einem kreisförmigen oder ovalen) Querschnitt möglich sind. Gemäß einer Ausführungsform ist der betreffende Querschnitt hierbei ein Querschnitt in einer Schnittebene, die sich senkrecht zu einer Längsrichtung der Profilschiene erstreckt.

Fig. 3 zeigt eine Frontansicht der Profilschiene 106 aus Fig. 2 gesehen von der Linie III-III in Fig. 2. Umgekehrt zeigt Fig. 2 eine Stirnansicht der Profilschiene 106 gesehen von der Linie II-II In Fig. 3.

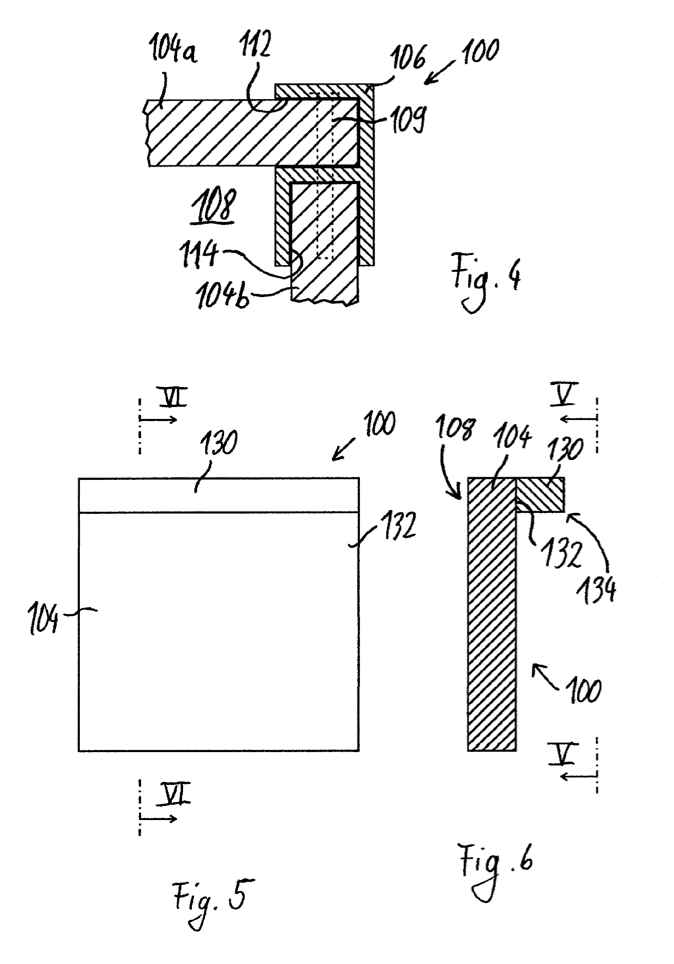

Fig. 4 zeigt eine Querschnittsansicht der Profilschiene 106 aus Fig. 2, wobei ein erstes Flächenelement 104a in die erste Aussparung 112 eingesetzt ist und ein zweites Flächenelement 104b die zweite Aussparung 114 eingesetzt ist.

Gemäß einer Ausführungsform enthält die Aussparungsvorrichtung 100 ein Befestigungselement 109, welches sich in das erste Flächenelement 104a und in das zweite Flächenelement 104b hinein erstreckt, um das erste Flächenelement 104a und das zweite Flächenelement 104b gegeneinander zu fixieren. Gemäß einer Ausführungsform erstreckt sich das Befestigungselement 109 durch das erste Flächenelement 104a hindurch, wie in Fig. 4 dargestellt. Wie bereits mit Bezug auf Fig. 1 erläutert wurde, kann das Befestigungselement 109 beispielsweise ein Nagel, eine Schraube, eine Tackernadel oder ein ähnliches Element sein, solange dieses Element geeignet ist, das erste Flächenelement 104a und das zweite Flächenelement 104b aneinander zu fixieren. Gemäß einer Ausführungsform erstreckt sich das Befestigungselement 109 in axialer Richtung der Profilschiene 106 neben der Profilschiene 106, in Übereinstimmung mit der Darstellung der Aussparungsvorrichtung 100 Fig. 4 (in der in Fig. 4 dargestellten Ansicht befindet sich das Befestigungselement 109 (in gestrichelten Linien dargestellt) hinter der Profilschiene 106).

Fig. 5 zeigt eine Aussparungsvorrichtung 100 gemäß Ausführungsformen der hierin offenbarten Gegenstände.

Gemäß einer Ausführungsform enthält die Aussparungsvorrichtung 100 ein Profilelement 130 auf einer der Aussparung 108 abgewandten Oberfläche 132 der Aussparungsvorrichtung 100 auf. Gemäß einer Ausführungsform bildet das Profilelement 130 auf der abgewandten Oberfläche 132 einen Vorsprung. Gemäß einer Ausführungsform enthält ein Flächenelement 104 auf einer der Aussparung abgewandten Oberfläche des Flächenelementes 104 das Profilelement 130, wie in Fig. 5 dargestellt. Gemäß einer Ausführungsform ist die Oberfläche 132 ist eine äußere Oberfläche des Flächenelemente 104 bzw. der Aussparungsvorrichtung 100.

Fig. 6 zeigt eine Querschnittsansicht der Aussparungsvorrichtung 100 aus Fig. 5 entlang der Linie VI-VI. Umgekehrt zeigt Fig. 5 die Aussparungsvorrichtung 100 aus Fig. 6 von der Linie V-V aus gesehen.

Gemäß einer Ausführungsform ist das Profilelement 130 aus Kunststoff (d.h. einem Polymermaterial) gebildet. Gemäß einer Ausführungsform ist das Profilelement 130 aus einem elastischen Material, wie beispielsweise einem Schaumstoff (z. B. Polyurethan) gebildet. Gemäß einer weiteren Ausführungsform ist das Profilelement 130 aus einem steifen Material, beispielsweise aus Holz gebildet. Es sollte sich jedoch verstehen, dass das Profilelement 130 aus jedem geeigneten Material gebildet sein kann, welches geeignet ist, um einen Vorsprung 134 auf einer äußeren Oberfläche der Aussparungsvorrichtung 100 zu bilden. Gemäß einer Ausführungsform ist das Material des Profilelementes 130 ausgewählt, um einem hydrostatischen Druck zu widerstehen, der beim Herstellen des Bauwerkes, in welchem die Aussparungsvorrichtung 100 zum Einsatz kommen soll, entsteht. Gemäß einer Ausführungsform ist das Profilelement 130 ein separates Element, welches an dem Flächenelement 104 befestigt ist, beispielsweise durch Kleben oder durch eines oder mehrere Befestigungselemente, beispielsweise Befestigungselemente, wie sie hierin beschrieben sind.

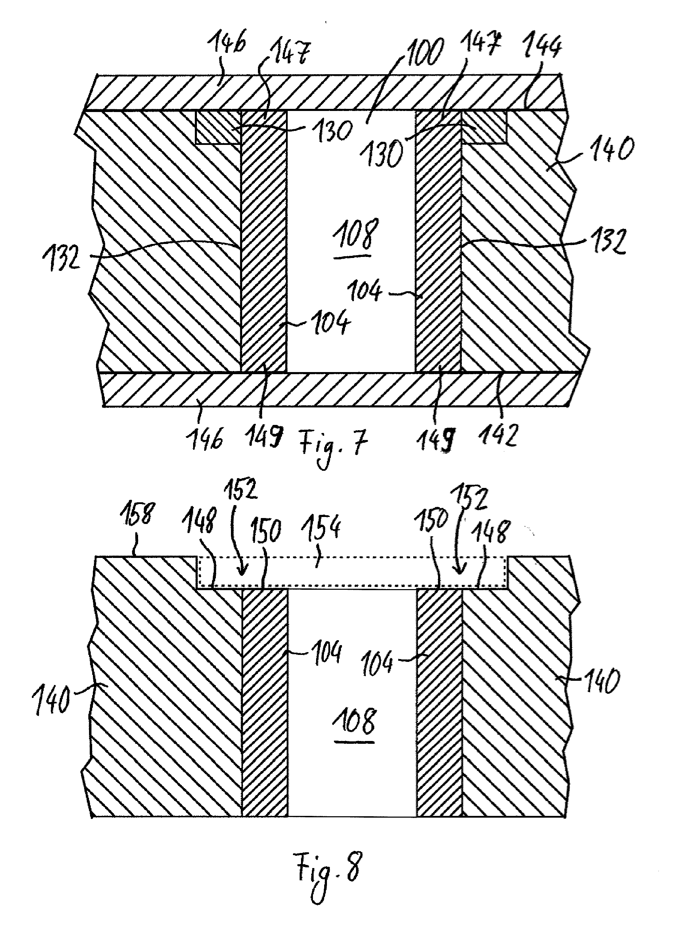

Fig. 7 zeigt einen Teil eines Bauwerkes 140 gemäß Ausführungsformen der hierin offenbarten Gegenstände mit zwei in Position befindlichen Schalungselementen.

Gemäß einer Ausführungsform enthält das Bauwerk 140 eine Aussparungsvorrichtung 100 gemäß Ausführungsformen der hierin offenbarten Gegenstände. Gemäß einer Ausführungsform definiert die Aussparungsvorrichtung 100 eine Aussparung bzw. ein Volumen 108 in dem Bauwerk 140. Gemäß einer Ausführungsform erstreckt sich die Aussparungsvorrichtung 100 von einer ersten Oberfläche 142 des Bauwerkes 140 bis zu einer zweiten Oberfläche 144 des Bauwerkes, welche entgegengesetzt der ersten Oberfläche 142 angeordnet ist. Die Aussparungsvorrichtung 100 bildet in einem solchen Fall ein Durchgangsloch in dem Bauwerk 140. Beispielsweise können die erste Oberfläche 142 und die zweite Oberfläche 144 des Bauwerkes 140 durch zwei entgegengesetzte Oberflächen eines Strukturelementes (z.B. einer Wand, einer Decke, eines Fundamentes, etc.) des Bauwerkes 140 gebildet sein.

Gemäß einer Ausführungsform kann die Aussparungsvorrichtung 100 zwischen zwei Schalungselementen 146 (z.B. zwischen zwei Schalttafeln) angeordnet sein.

Entsprechend kann ein Verfahren zum Herstellen einer Aussparung 108 in dem Bauwerk 140 ein Platzieren der Aussparungsvorrichtung 100 an mindestens einem Schalungselement 146 und Umgeben der Aussparungsvorrichtung 100 mit einem Baustoff, beispielsweise Beton, aufweisen.

Gemäß einer weiteren Ausführungsform enthält die Aussparungsvorrichtung 100 Flächenelemente 104, sowie mindestens ein Profilelement 130 auf einer der Aussparung 108 abgewandten Oberfläche 132 der Aussparungsvorrichtung 100. Gemäß einer Ausführungsform ist das Profilelement 130 durch eine geeignete Schnur, beispielsweise eine Polyurethanschnur gebildet, die sich beispielsweise gemäß einer Ausführungsform um die Aussparungsvorrichtung 100 herum erstreckt. Gemäß einer anderen Ausführungsform ist an zwei entgegengesetzten äußeren Oberflächen 132 jeweils ein separates Profilelement 130 angeordnet.

Gemäß einer weiteren Ausführungsform kann die Aussparungsvorrichtung an beiden stirnseitigen Enden 147, 149 ein Profilelement 130 aufweisen. Beispielsweise können an einem ersten stirnseitigen Ende 147 Profilelemente 130 an zwei gegenüberliegenden Seiten der Aussparungsvorrichtung 100 angeordnet sein, wie in Fig. 7 dargestellt. Gemäß einer weiteren Ausführungsform können an einem zweiten stirnseitigen Ende 149 Profilelemente an allen Seiten der Aussparungsvorrichtung 100 angeordnet sein (in Fig. 7 nicht dargestellt).

Fig. 8 zeigt das Bauwerk 140 aus Fig. 7 nach dem Entfernen der Schalungselemente 146.

Gemäß einer Ausführungsform wird die Aussparungsvorrichtung 100 aus dem Bauwerk 140 nicht entfernt. Gemäß einer Ausführungsform ist die Aussparungsvorrichtung 100 ausgebildet, um nicht aus dem Bauwerk 140 entfernt zu werden (z. B. durch die Wahl der Materialien, beispielsweise durch Profilschienen aus Aluminium oder Kunststoff und Flächenelemente in Form von Faserzementplatten oder Holzfaserplatten).

Gemäß einer Ausführungsform umfasst ein Verfahren zum Herstellen einer Aussparung 108 ein Entfernen des Profilelementes 130 (in Fig. 8 nicht dargestellt) sowie eines Teils (in Fig. 8 nicht dargestellt) des Flächenelementes 104, welches sich zwischen der Aussparung 108 und dem Profilelement 130 erstreckt. Beispielsweise kann zunächst das Profilelement 130 entfernt werden, zur Bildung einer Vertiefung 148 in dem Bauwerk 140, um anschließend den Teil des Flächenelementes 104 zu entfernen, der sich zwischen der Aussparung 108 und der Vertiefung 148 in dem Bauwerk 140 erstreckt. Gemäß einer Ausführungsform bilden somit die Vertiefung 148 und eine Stirnfläche 150 des Flächenelements 104 eine vertiefte Aufnahme 152 (engl. recessed seat) beispielsweise für eine Abdeckung 154 (in Fig. 8 gestrichelt dargestellt) für die Aussparung 108. Durch die vertiefte Aufnahme 152 kann die Abdeckung 154 fluchtend mit einer Oberfläche 158 des Bauwerks 140 angeordnet werden. Auf diese Weise werden vorstehende Kanten vermieden und die Abdeckung 154 kann auch nicht seitlich verrutschen. Somit können auf einfache Weise Unfallverhütungsvorschriften eingehalten werden. Gemäß einer Ausführungsform ist die Abdeckung 154 durchtrittsicher, unverrückbar und deckengleich.

Gemäß einer Ausführungsform wird der Teil der Flächenelemente 104, welcher sich zwischen der Aussparung 108 und dem Profilelement 130 erstreckt, durch geeignete Werkzeuge (Säge, Hammer, etc.) entfernt. Gemäß einer Ausführungsform weist das Flächenelement 104 eine Sollbruchstelle (beispielsweise in Form eines Schlitzes) im Bereich der zu bildenden Stirnfläche 150 des Flächenelementes auf, um ein Entfernen des Teils des Flächenelementes 104, welches sich zwischen der Aussparung 108 und dem Profilelement erstreckt, zu erleichtern.

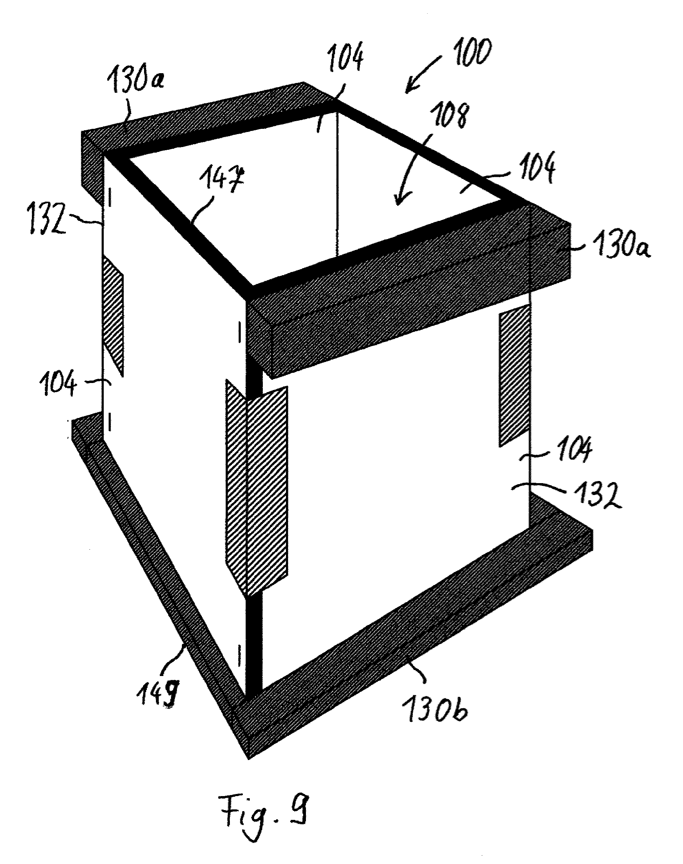

Fig. 9 zeigt eine perspektivische Ansicht einer Aussparungsvorrichtung gemäß Ausführungsformen der hierin offenbarten Gegenstände. Gemäß einer Ausführungsform enthält die Aussparungsvorrichtung 100 vier Flächenelemente 104. Ferner weist die Aussparungsvorrichtung 100 zwei separate Profilelemente 130a auf, beispielsweise an einem ersten stirnseitigen Ende 147 der Aussparungsvorrichtung, wie in Fig. 9 dargestellt. Gemäß einer Ausführungsform sind die beiden separaten Profilelemente 130a an zwei entgegengesetzten äußeren Oberflächen 132 der Aussparungsvorrichtung angeordnet.

Ferner enthält die Aussparungsvorrichtung 100 gemäß einer Ausführungsform mindestens ein Profilelement 130b auf einer der Aussparung 108 abgewandten Oberfläche 132 der Aussparungsvorrichtung 100, beispielsweise an einem zweiten stirnseitigen Ende 149. Gemäß einer Ausführungsform erstreckt sich das Profilelement 130b (in Form eines umlaufenden Profilelementes) in Umfangsrichtung um die Aussparungsvorrichtung 100 herum, wie in Fig. 9 dargestellt. Gemäß einer Ausführungsform ist das umlaufende Profilelement 130b durch vier Profilelementteile gebildet, die jeweils an einer der Flächenelemente 104 angeordnet sind. Gemäß einer Ausführungsform bildet das umlaufende Profilelement 130b einen ringförmig geschlossenen Vorsprung um die Aussparungsvorrichtung.

Der Fachmann versteht, dass das umlaufende Profilelement 130b eine umlaufende vertiefte Aufnahme für eine Abdeckung der Aussparung 108 definiert, während die beiden an entgegengesetzten äußeren Oberflächen angeordneten separaten Profilelemente 130a entsprechende gegenüberliegende vertiefte Aufnahmen definieren. Die vertieften Aufnahmen sind in Fig. 9 nicht dargestellt - die Herstellung der vertieften Aufnahmen ist jedoch beispielsweise analog zu der oben mit Bezug auf die vertiefte Aufnahme 152 in Fig. 8 angegebenen Beschreibung möglich (Entfernen des Profilelementes 130a, 130b sowie des Teils des Flächenelementes 104, welches sich zwischen der Aussparung 108 und dem betreffenden Profilelement 130a, 130b erstreckt).

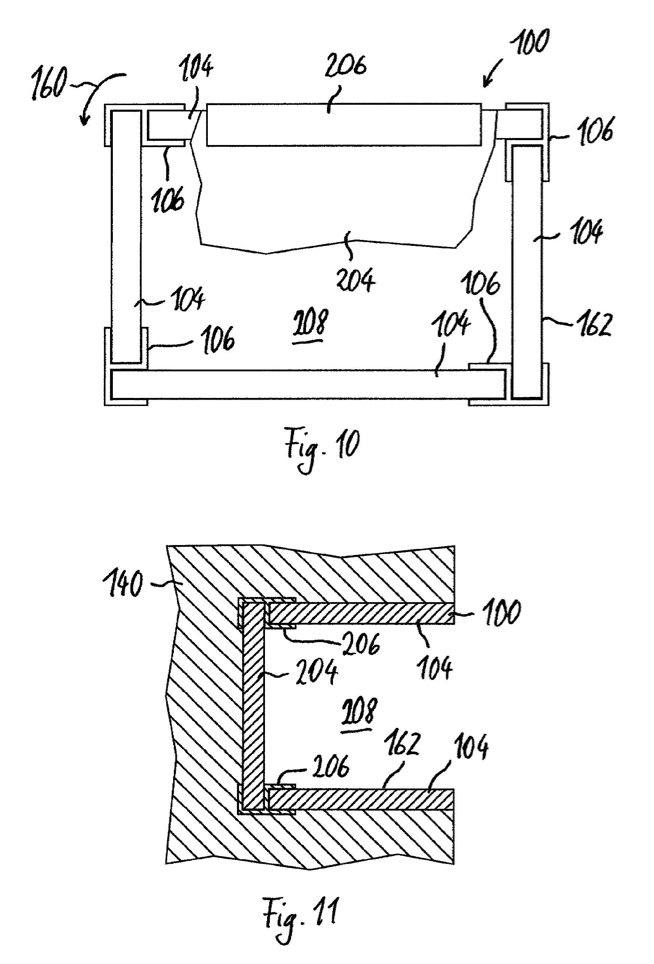

Fig. 10 zeigt eine Draufsicht auf eine Aussparungsvorrichtung 100 gemäß Ausführungsformen der hierin offenbarten Gegenstände.

Gemäß einer Ausführungsform weist die Aussparungsvorrichtung 100 einen rechteckigen Querschnitt auf, wie in Fig. 10 dargestellt. Gemäß einer weiteren Ausführungsform weist die Aussparungsvorrichtung 100 vier Flächenelemente 104 und vier Profilschienen 106 auf, die eine in Umfangsrichtung 160 ringförmig geschlossene Anordnung 162 (um eine Aussparung 208 herum) bilden, wie in Fig. 10 dargestellt.

Gemäß einer Ausführungsform weist die Aussparungsvorrichtung 100 neben den Flächenelementen 104 und den Profilschienen 106, die zusammen die ringförmig geschlossene Anordnung 162 bilden, ein weiteres Flächenelement 204 (zum Beispiel ein fünftes Flächenelement, wie in Fig. 10 dargestellt) auf, welches quer (zum Beispiel senkrecht) zu den Flächenelementen 104 und den Profilschienen 106 angeordnet ist. In Fig. 10 ist das weitere Flächenelement 204 nur zum Teil dargestellt, um die ringförmig geschlossene Anordnung 162 nicht zu verdecken. Gemäß einer Ausführungsform überdeckt das weitere Flächenelement 204 die Aussparung 208 jedoch vollständig. Gemäß einer Ausführungsform ist das weitere Flächenelement mit mindestens einer weiteren Profilschiene 206 an der ringförmig geschlossenen Anordnung 162 der Flächenelemente 104 und Profilschienen 106 befestigt, wie in Fig. 10 dargestellt. Beispielsweise kann die Aussparungsvorrichtung 100 gemäß einer Ausführungsform vier weitere Profilschienen 206 aufweisen, beispielsweise eine für jede Seite der ringförmig geschlossenen Anordnung 162, von denen in Fig. 10 jedoch nur eine Profilschiene 206 dargestellt ist. Gemäß einer Ausführungsform sind die Profilschienen 206 identisch mit den Profilschienen 106.

Fig. 11 zeigt ein weiteres Bauwerk 140 gemäß Ausführungsformen der hierin offenbarten Gegenstände.

Gemäß einer Ausführungsform enthält das Bauwerk 140 eine Aussparungsvorrichtung 100, welche eine ringförmig geschlossene Anordnung 162 aus Flächenelementen 104 und Profilschienen 106, sowie ein weiteres Flächenelement 204 aufweist, welches quer zu der ringförmigen Anordnung 162 angeordnet ist. Eine solche Aussparungsvorrichtung 100 ist geeignet, eine Aussparung 208 in Form einer Vertiefung in dem Bauwerk 140 zu bilden. Eine solche Aussparung 208 kann beispielsweise einen Kabelkanal bilden oder aufnehmen, oder Bedienelemente wie beispielsweise einen Schalter oder einen Aufzugtaster aufnehmen. Beispielsweise ist die Aussparungsvorrichtung 100 in Fig. 11 eine Aussparungsvorrichtung 100, wie Sie mit Bezug auf Fig. 10 beschrieben ist.

Gemäß einer Ausführungsform verbleibt die Aussparungsvorrichtung 100 in dem Bauwerk 140 und bildet somit eine sogenannte verlorene Schalung. Auf diese Weise muss die Aussparungsvorrichtung nicht rückgebaut oder ausgeschalt werden, was die Herstellungskosten der Aussparung 108, 208 reduziert. Ferner entstehen durch die Verwendung der Aussparungsvorrichtung 100 als verlorene Schalung keine Entsorgungskosten für die Aussparungsvorrichtung 100.

Gemäß einer Ausführungsform ist das Bauwerk 140 ein Betonbauwerk, beispielsweise ein Betonfertigteil. Das Bauwerk 140 kann beispielsweise ein Fundament, eine Bodenplatte, eine Decke, eine Wand oder ein sonstiges Strukturelement beispielsweise eines Gebäudes sein. Gemäß einer Ausführungsform kann vorgesehen sein, dass die Aussparungsvorrichtung 100 an einem oder mehreren Schalungselementen 146 (beispielsweise wie in Fig. 7 dargestellt) befestigt wird und der die Aussparungsvorrichtung 100 umgebende Raum mit Beton aufgefüllt wird, um das Bauwerk 140 mit der durch die Aussparungsvorrichtung 100 definierten Aussparung zu bilden. Eine Aussparungsvorrichtung gemäß Ausführungsformen der hierin offenbarten Gegenstände kann jedoch auch bei anderer Bauweise, beispielsweise Ziegelbauweise, zum Bilden von Aussparungen verwendet werden. Eine Aussparungsvorrichtung 100 gemäß Ausführungsformen der hierin offenbarten Gegenstände kann für Aussparungen jeder Art verwendet werden, beispielsweise für eine Aussparung zur Durchführung eines Abwasserrohres, einer Versorgungsleitung (Wasser oder Strom), einem Schornsteinrohr, einer Tür, einem Fenster oder dergleichen.

Ausführungsformen der hierin offenbarten Gegenstände liefern ein rationelles Massenprodukt für die Herstellung von Aussparungen in Bauwerken, welches dennoch leicht und einfach herzustellen und flexibel bei Änderungen ist. Abhängig von dem Material der Flächenelemente (z.B. bei Holzfaserplatten, Holz oder Faserzement) ist eine Bearbeitung mit einem Taschenmesser möglich. Durch den einfachen Aufbau (zum Beispiel bei einer Klemmverbindung) sind minimale Rüstzeiten oder Schalzeiten erforderlich, beispielsweise unter 1 Minute. Insbesondere Flächenelemente in Form von Faserzementplatten oder Holzfaserplatten halten sicher in den Profilschienen. Aussparungsvorrichtungen gemäß Ausführungsformen der hierin offenbarten Gegenstände liefern einen stabilen und kostengünstigen Materialmix, minimieren Fehler und können mit beliebigen Abmessungen hergestellt werden. Beispielsweise kann problemlos eine Aussparungsbaugruppe für eine seltene 15 cm Geschossdecke hergestellt werden und Halbfertigteile, welche beispielsweise eine 5 cm dicke Betonplatte aufweisen, auf die noch 10 cm Ortbeton aufgebracht wird, können mit einer Aussparungsvorrichtung gemäß Ausführungsformen der hierin offenbarten Gegenstände ausgerüstet werden. Bei einer leichten Beschädigung der Aussparungsvorrichtung ist ein Kleben möglich.

Es sollte angemerkt werden, dass ein eine Aussparungsbaugruppe, eine Aussparungsvorrichtung oder ein Teil davon nicht auf die dezidierten Entitäten beschränkt ist, wie sie in einigen Ausführungsformen beschrieben sind. Vielmehr können die hierin offenbarten Gegenstände auf zahlreichen Weisen und in abweichender Granularität implementiert werden, während sie immer noch die offenbarte spezifische Funktionalität liefern. Beispielsweise kann anstelle des Profilelements, welches sich gemäß einer Ausführungsform um die Aussparungsvorrichtung herum erstreckt, das Profilelement durch zwei oder mehr Profilelementteile, beispielsweise vier Profilelementteile gebildet sein.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hierin offenbarten Ausführungsformen und explizit beschriebenen Ausführungsvarianten eine Vielzahl von verschiedenen Ausführungsvarianten als offenbart anzusehen sind. Ferner sollte erwähnt werden, dass Begriffe wie "ein" oder "eines" eine Mehrzahl nicht ausschließen. Begriffe wie "enthaltend" oder "aufweisend" schließen weitere Merkmale oder Verfahrensschritte nicht aus.

Zusammenfassend bleibt festzustellen:
Offenbart wird eine Aussparungsbaugruppe für ein Bauwerk, insbesondere ein Betonbauwerk, wobei die Aussparungsbaugruppe verwendbar ist, um eine Aussparung in dem Bauwerk zu bilden, die Aussparungsbaugruppe enthaltend: ein erstes Flächenelement; ein zweites Flächenelement; mindestens eine Profilschiene mit einer ersten Ausnehmung und einer zweiten Ausnehmung, wobei das erste Flächenelement in die erste Ausnehmung und das zweite Flächenelement in die zweite Ausnehmung einsetzbar ist, um eine Aussparungsvorrichtung zu bilden.

## Patentansprüche

1. Aussparungsbaugruppe (102) für ein Bauwerk (140), insbesondere ein Betonbauwerk, wobei die Aussparungsbaugruppe (102) verwendbar ist, um eine Aussparung in dem Bauwerk (140) zu bilden, die Aussparungsbaugruppe (102) enthaltend:
ein erstes Flächenelement (104, 204);
ein zweites Flächenelement (104, 204);
mindestens eine Profilschiene (106, 206) mit einer ersten Ausnehmung (112) und einer zweiten Ausnehmung (114), wobei das erste Flächenelement (104, 204) in die erste Ausnehmung (112) und das zweite Flächenelement (104, 204) in die zweite Ausnehmung (114) einsetzbar ist.

2. Aussparungsbaugruppe (102) nach Anspruch 1, wobei mindestens eine von der ersten Ausnehmung (112) und der zweiten Ausnehmung (114) durch einen Schlitz in der Profilschiene (106, 206), insbesondere durch einen im Querschnitt U-förmigen Profilabschnitt, gebildet ist.

3. Aussparungsbaugruppe (102) nach Anspruch 1 oder 2, wobei mindestens eine von der ersten Ausnehmung (112) und der zweiten Ausnehmung (114) eine lichte Weite (120) aufweist, die kleiner ist als die Dicke des in der betreffenden Ausnehmung angeordneten Flächenelementes (104, 204), um das in der betreffenden Ausnehmung (112, 114) angeordnete Flächenelement (104, 204) in Klemmeingriff zu halten.

4. Aussparungsbaugruppe (102) nach einem der vorhergehenden Ansprüche, wobei das erste Flächenelement (104, 204) und das zweite Flächenelement (104, 204) durch rechteckige Platten gebildet sind.

5. Aussparungsbaugruppe (102) nach einem der vorhergehenden Ansprüche, wobei das erste Flächenelement (104, 204) und das zweite Flächenelement (104, 204) aus mindestens einem von einem Faserverbundmaterial, insbesondere aus Faserzementmaterial, Gipsfasermaterial, Holzfaserzementgebundenem Material, Holz, Kunststoff, Metall besteht.

6. Aussparungsbaugruppe (102) nach einem der vorhergehenden Ansprüche, wobei die Profilschiene (106, 206) aus Metall oder Kunststoff gebildet ist.

7. Aussparungsvorrichtung (100) enthaltend eine Aussparungsbaugruppe (102) nach einem der Ansprüche 1 bis 6, wobei das erste Flächenelement (104, 204) in die erste Ausnehmung (112) eingesetzt ist und das zweite Flächenelement (104, 204) in die zweite Ausnehmung (114) eingesetzt ist.

8. Aussparungsvorrichtung (100) nach Anspruch 7, ferner enthaltend ein Profilelement (130) auf einer der Aussparung abgewandten Oberfläche der Aussparungsvorrichtung.

9. Aussparungsvorrichtung (100) nach einem der Ansprüche 7 oder 8, ferner enthaltend ein Befestigungselement (109), welches sich in das erste Flächenelement (104, 204) und in das zweite Flächenelement (104, 204) hinein erstreckt, um das erste Flächenelement (104, 204) und das zweite Flächenelement (104, 204) aneinander zu fixieren.

10. Aussparungsvorrichtung (100) nach einem der Ansprüche 7 bis 9, wobei
die Profilschiene (106, 206) eine erste Öffnung (122) aufweist, durch welche das erste Flächenelement (104, 204) entlang einer ersten Richtung (123) in die erste Ausnehmung (112) einführbar ist;
die Profilschiene (106, 206) eine zweite Öffnung (124) aufweist, durch welche das zweite Flächenelement (104, 204) entlang einer zweiten Richtung (125) in die zweite Ausnehmung (114) einführbar ist; und
die erste Richtung (123) und die zweite Richtung (125) einen Winkel größer Null Grad einschließen.

11. Aussparungsvorrichtung (100) nach dem vorhergehenden Anspruch, wobei die erste Richtung (123) und die zweite Richtung (125) einen Winkel von 90 Grad einschließen.

12. Aussparungsvorrichtung (100) nach einem der vorhergehenden Ansprüche, enthaltend mindestens zwei der Flächenelemente (104, 204) und mindestens zwei der Profilschienen (106, 206), wobei die mindestens zwei Flächenelemente (104, 204) und die mindestens zwei Profilschienen (106, 206) eine in einer Umfangsrichtung ringförmig geschlossene Anordnung (162) bilden.

13. Bauwerk (140), insbesondere ein Betonbauwerk (140), enthaltend eine Aussparungsvorrichtung (100) nach einem der Ansprüche 7 bis 12, wobei die Aussparungsvorrichtung (100) eine verlorene Schalung bildet.

14. Verwendung einer Profilschiene (106, 206) zum Herstellen einer Aussparungsvorrichtung (100) für ein Bauwerk (140), die Profilschiene (106, 206) enthaltend:
eine erste Ausnehmung (112); und
eine zweite Ausnehmung (114);
wobei die erste Ausnehmung (112) und die zweite Ausnehmung (114) ausgebildet sind, um jeweils ein Flächenelement (104, 204) aufzunehmen.

15. Verfahren zum Herstellen einer Aussparungsvorrichtung (100) für ein Bauwerk (140), das Verfahren enthaltend:
Bereitstellen einer Profilschiene (106, 206) mit einer ersten Ausnehmung (112) und einer zweiten Ausnehmung (114);
Einführen eines ersten Flächenelement (104, 204)s in die erste Ausnehmung (112); und
Einführen eines zweiten Flächenelement (104, 204)s in die zweite Ausnehmung (114).

## Geänderte Patentansprüche

### Geänderte Patentansprüche gemäss Regel 137(2) EPÜ.

1. Aussparungsbaugruppe (102) für ein Betonbauwerk (140), wobei die Aussparungsbaugruppe (102) verwendbar ist, um eine Aussparung in dem Betonbauwerk (140) zu bilden, die Aussparungsbaugruppe (102) enthaltend:
ein erstes Flächenelement (104, 204);
ein zweites Flächenelement (104, 204);
mindestens eine Profilschiene (106, 206) mit einer ersten Ausnehmung (112) und einer zweiten Ausnehmung (114), wobei das erste Flächenelement (104, 204) in die erste Ausnehmung (112) und das zweite Flächenelement (104, 204) in die zweite Ausnehmung (114) einsetzbar ist.

2. Aussparungsbaugruppe (102) nach Anspruch 1, wobei mindestens eine von der ersten Ausnehmung (112) und der zweiten Ausnehmung (114) durch einen Schlitz in der Profilschiene (106, 206), insbesondere durch einen im Querschnitt U-förmigen Profilabschnitt, gebildet ist.

3. Aussparungsbaugruppe (102) nach Anspruch 1 oder 2, wobei mindestens eine von der ersten Ausnehmung (112) und der zweiten Ausnehmung (114) eine lichte Weite (120) aufweist, die kleiner ist als die Dicke des in der betreffenden Ausnehmung angeordneten Flächenelementes (104, 204), um das in der betreffenden Ausnehmung (112, 114) angeordnete Flächenelement (104, 204) in Klemmeingriff zu halten.

4. Aussparungsbaugruppe (102) nach einem der vorhergehenden Ansprüche, wobei das erste Flächenelement (104, 204) und das zweite Flächenelement (104, 204) durch rechteckige Platten gebildet sind.

5. Aussparungsbaugruppe (102) nach einem der vorhergehenden Ansprüche, wobei das erste Flächenelement (104, 204) und das zweite Flächenelement (104, 204) aus mindestens einem von einem Faserverbundmaterial, insbesondere aus Faserzementmaterial, Gipsfasermaterial, Holzfaserzementgebundenem Material, Holz, Kunststoff, Metall besteht.

6. Aussparungsbaugruppe (102) nach einem der vorhergehenden Ansprüche, wobei die Profilschiene (106, 206) aus Metall oder Kunststoff gebildet ist.

7. Aussparungsvorrichtung (100) enthaltend eine Aussparungsbaugruppe (102) nach einem der Ansprüche 1 bis 6, wobei das erste Flächenelement (104, 204) in die erste Ausnehmung (112) eingesetzt ist und das zweite Flächenelement (104, 204) in die zweite Ausnehmung (114) eingesetzt ist.

8. Aussparungsvorrichtung (100) nach Anspruch 7, ferner enthaltend ein Profilelement (130) auf einer der Aussparung abgewandten Oberfläche der Aussparungsvorrichtung.

9. Aussparungsvorrichtung (100) nach einem der Ansprüche 7 oder 8, ferner enthaltend ein Befestigungselement (109), welches sich in das erste Flächenelement (104, 204) und in das zweite Flächenelement (104, 204) hinein erstreckt, um das erste Flächenelement (104, 204) und das zweite Flächenelement (104, 204) aneinander zu fixieren.

10. Aussparungsvorrichtung (100) nach einem der Ansprüche 7 bis 9, wobei
die Profilschiene (106, 206) eine erste Öffnung (122) aufweist, durch welche das erste Flächenelement (104, 204) entlang einer ersten Richtung (123) in die erste Ausnehmung (112) einführbar ist;
die Profilschiene (106, 206) eine zweite Öffnung (124) aufweist, durch welche das zweite Flächenelement (104, 204) entlang einer zweiten Richtung (125) in die zweite Ausnehmung (114) einführbar ist; und
die erste Richtung (123) und die zweite Richtung (125) einen Winkel größer Null Grad einschließen.

11. Aussparungsvorrichtung (100) nach dem vorhergehenden Anspruch, wobei die erste Richtung (123) und die zweite Richtung (125) einen Winkel von 90 Grad einschließen.

12. Aussparungsvorrichtung (100) nach einem der vorhergehenden Ansprüche, enthaltend mindestens zwei der Flächenelemente (104, 204) und mindestens zwei der Profilschienen (106, 206), wobei die mindestens zwei Flächenelemente (104, 204) und die mindestens zwei Profilschienen (106, 206) eine in einer Umfangsrichtung ringförmig geschlossene Anordnung (162) bilden.

13. Betonbauwerk (140), enthaltend eine Aussparungsvorrichtung (100) nach einem der Ansprüche 7 bis 12, wobei die Aussparungsvorrichtung (100) eine verlorene Schalung bildet.

14. Verwendung einer Profilschiene (106, 206) zum Herstellen einer Aussparungsvorrichtung (100) für ein Betonbauwerk (140), die Profilschiene (106, 206) enthaltend:
eine erste Ausnehmung (112); und
eine zweite Ausnehmung (114);
wobei die erste Ausnehmung (112) und die zweite Ausnehmung (114) ausgebildet sind, um jeweils ein Flächenelement (104, 204) aufzunehmen.

15. Verfahren zum Herstellen einer Aussparungsvorrichtung (100) für ein Betonbauwerk (140), das Verfahren enthaltend:
Bereitstellen einer Profilschiene (106, 206) mit einer ersten Ausnehmung (112) und einer zweiten Ausnehmung (114);
Einführen eines ersten Flächenelement (104, 204)s in die erste Ausnehmung (112); und
Einführen eines zweiten Flächenelement (104, 204)s in die zweite Ausnehmung (114).
